# EUROPEAN PATENT SPECIFICATION

(11) **EP 1 095 533 B1**
(45) Date of publication and mention of the grant of the patent: **21.03.2007**
(21) Application number: 99934737.0
(22) Date of filing: 02.07.1999
(51) Int. Cl.: H04Q 7/38

(54) **AUTHENTICATION METHOD AND CORRESPONDING SYSTEM FOR A TELECOMMUNICATIONS NETWORK**
AUTHENTIKATIONSVERFAHREN UND ENTSPRECHENDES SYSTEM FÜR EIN TELEKOMMUNIKATIONSNETZ
PROCEDE D'AUTHENTIFICATION POUR UN RESEAU DE TELECOMMUNICATIONS ET SYSTEME CORRESPONDANT

(30) Priority: 07.07.1998 FI 981564
(43) Date of publication of application: 02.05.2001
(73) Proprietor: Nokia Corporation, 02150 Espoo (FI)
(72) Inventor: VERKAMA, Markku, FIN-02120 Espoo (FI)
(74) Representative: Ruuskanen, Juha-Pekka
(86) International application number: PCT/FI1999/000593
(87) International publication number: WO 2000/002407

(56) References cited:
- WO-A1-97/45814
- WO-A1-98/32301
- WO-A1-98/44402
- US-A- 5 729 537
- US-A- 5 864 757

## Description

### Field of the invention

The invention relates generally to implementation of authentication in a telecommunications network, especially in an IP network (IP = Internet Protocol). Authentication means verification of the identity of the party, such as the subscriber, who has generated the data. Using authentication it is also possible to guarantee integrity and confidentiality of the said data. Authentication may be performed for various purposes, such as for checking the right of use of network services. The invention is intended for use especially in connection with mobile terminals, but the solution according to the invention may also be used in connection with fixed terminals.

### Background of the invention

The increasing popularity of various kinds of mobile terminals, such as laptops, PDA (Personal Digital Assistant) equipment or intelligent telephones is a current trend in telecommunications.

In traditional IP networks, mobile users have not been able to receive data outside their own IP sub-network, because the network's routers have not been able to relay datagrams to the users new place of location. Since this reduces considerably the usefulness of mobile terminals, properties supporting mobility have been developed for the IP protocol. The Mobile IP (hereinafter MIP) is a mechanism for controlling the user's mobility between different IP sub-networks. MIP is a version of the existing IP which supports the mobility of terminal equipment.

MIP is based on the idea that every mobile host or mobile node has an allocated agent ("home agent"), which relays packets to the current location of the mobile node. When a mobile node is moving from one sub-network to another, it registers with the agent ("foreign agent") serving the current sub-network. The last-mentioned performs checks together with the mobile node's home agent, it registers the mobile node and transmits the registration information to it. Packets addressed to the mobile node are transmitted to the mobile node's original place of location (to the home agent in the own sub-network), from where they are relayed further to the current foreign agent, which transmits them further to the mobile node. Since the present invention is not concerned with the MIP, this protocol will not be explained further in this context. The MIP principle is described e.g. in RFC 2002, October 1996 (Request For Comments) or in an article by Upkar Varshney, Supporting Mobility with Wireless ATM, Internet Watch, January 1997, where the interested reader will find background information, if he so desires.

As was mentioned above, registration is carried out with the home agent located in the home sub-network, when the user is visiting some other IP sub-network. In connection with the registration the home agent authenticates the user. In other words, the home agent ensures the identity of the party who has sent the registration request.

However, management of the keys needed for authentication is a serious problem on the Internet. Various systems have been developed to improve the information security properties of the network by which users may send the information encrypted to the other party. One such system is Kerberos, which is a service by which network users and services may authenticate one another and with which users and services may set up encrypted data transmission connections between each other. However, such systems are mainly intended for stationary terminal equipment, they are complex and heavy, and they require either registration beforehand as users of the concerned systems or at least heavy communication between the parties before the terminal equipment is allowed to transmit the useful information proper.

US 5,729,537 describes a method fo providing anonymous authentication of a communication station in a communication network. Access is provided only after authentication of the communication station and is provided without individually identifying the communication station to the network.

### Summary of the invention

The purpose of the invention is to eliminate the drawback described above and to bring about a solution, with which the terminal equipment is able to start useful traffic quickly after having connected to the network.

This purpose is achieved with the solution defined in the independent claims.

In the invention, a procedure known from the mobile communications network context is used to generate the secret of a connection between the network and a piece of terminal equipment located in the network, whereby when the terminal equipment connects to the network it can perform a normal registration (demanding only little exchange of messages), in connection with which information will pass which indicates the secret in question. The invention is based on the idea that a SPI index (Security Parameter Index) defined in MIP, which is an indicator normally indicating a data unit telling various information relating to the manner of carrying out the authentication, can be used solely for indicating the said secret, while letting other such matters be predetermined constants, which can be indicated by the SPI parameter. In this way, means known from the mobile communications network can be used for generating the secret in question.

Owing to the solution in accordance with the invention, a terminal is able, when attaching to the network, to start a useful traffic very easily and without any heavy or time-consuming exchange of messages. Even if the secret between the terminal and the network is not defined exactly in advance, only a normal MIP registration is needed in connection with the attachment to the IP network. In addition, the security level is improved, because the secret between the parties is no longer a fixed key but one that changes dynamically.

Owing to the solution in accordance with the invention, those ISP operators who also provide mobile station services need not separately procure any key management system for the IP network, but they can use also for this purpose the characteristics of the mobile communications network they are operating.

### Brief description of the figures

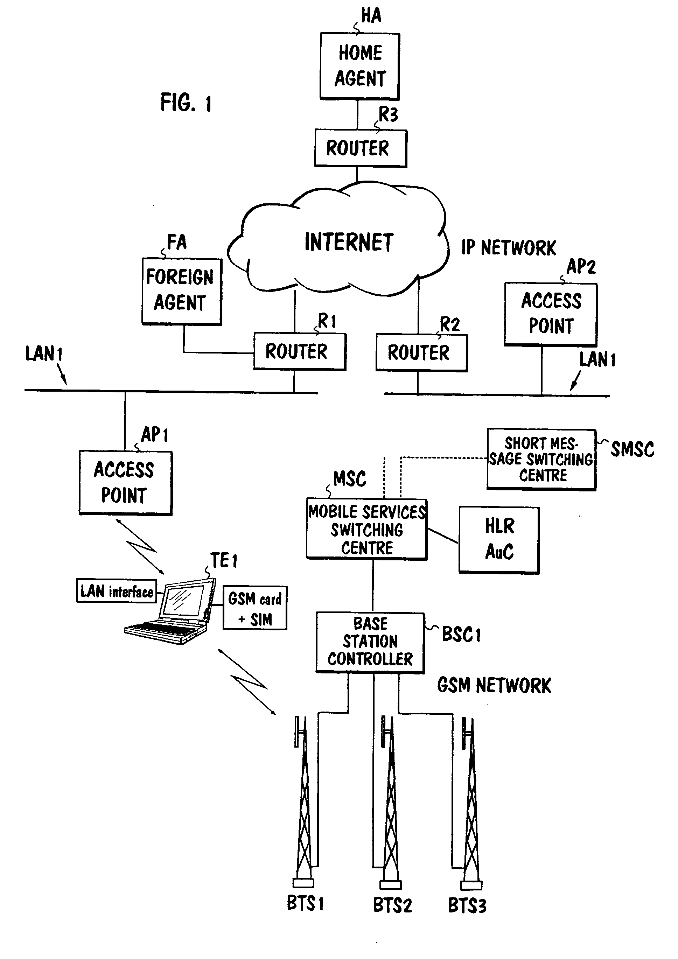

In the following, the invention and its advantageous embodiments are described in greater detail with reference to Figures 1...5 in the examples according to the appended drawings, wherein
Figure 1 illustrates an operating environment of the method in accordance with the invention;
Figure 2 illustrates an exchange of messages going on between various elements;
Figure 3 illustrates the structure of registration messages to be transmitted between a mobile node and the home agent;
Figure 4 illustrates the structure of the authentication extension of the registration message; and
Figure 5 illustrates those functional blocks of the terminal which are essential from the viewpoint of the invention.

### Detailed description of the invention

Figure 1 shows a typical operating environment of the method according to the invention. Users moving in the system's area have laptops or other such terminals, e.g. PDA equipment or intelligent telephones, at their disposal. The figure illustrates only one terminal TE1, which in this example is assumed to be a laptop. Two IP sub-networks are shown in the figure: the first is a LAN1 local area network, e.g. an Ethernet local area network, which is connected to the Internet through router R1, and the second is a LAN2 local area network, which is connected to the internet through router R2. The local area networks may be e.g. internal networks of business corporations.

The terminals have access to the sub-networks by way of access points AP1 and, correspondingly, AP2 in a manner known as such, e.g. in a wireless manner, as is shown in the figure. It is assumed in the figure that terminal TE1 is in connection with the local area network LAN1.

The terminal typically includes access means both to the local area network (to the IP network) and to the GSM mobile communications network (Global System for Mobile Communications). Access to the local area network takes place e.g. with the aid of a LAN card in the terminal and to the GSM network with the aid of a GSM card, which in practice is a stripped telephone located e.g. in the laptop's PCMCIA expansion slot. In addition, a SIM (Subscriber Identity Module) is connected to the GSM card.

As regards the GSM network the invention does not require any special solutions, so the GSM network's implementation is known as such. Of the GSM network the figure shows terminal TE1, three base transceiver stations BTS1...BTS3, their common base station controller BSC1, a mobile services switching centre MSC, through the system interface of which the mobile communications network is connected with other networks, and a home location register HLR, in connection with which there is an authentication centre AuC. In addition, the figure shows a short message switching centre SMSC, which is used in one embodiment of the invention.

The figure also shows the home agent HA of terminal TE1, which is located in connection with the router R3 connected to the Internet. In practice, the organisation owning the home agent often functions not only as an ISP (Internet Service Provider) operator but also as a mobile communications operator, for which reason it is possible from the home agent HA freely to establish a connection to the mobile communications network. In practice, the router, which has a home agent function, and the home location register may be located e.g. in the same equipment premises.

In an environment of the kind shown in the figure, the user may (using known MIP mechanisms) move freely (without any interruption in the communication) from one IP sub-network to another. In addition, the data connection can be preserved with the aid of the GSM network, although the terminal moves out of the coverage area of the (wireless) local area network. In this way the local area networks form local areas (so-called hot spots), wherein the terminal has a high rate data connection, and when the user moves out of the area of the local area network, the connection can be preserved owing to the GSM network. Since these procedures are known as such and they are not related to the invention proper, they will not be described more closely in this context.

In accordance with the invention, authentication mechanisms of the GSM network are used in the authentication performed in connection with the registration of the terminal. In the following, registration and the authentication to be performed in the same connection are described first.

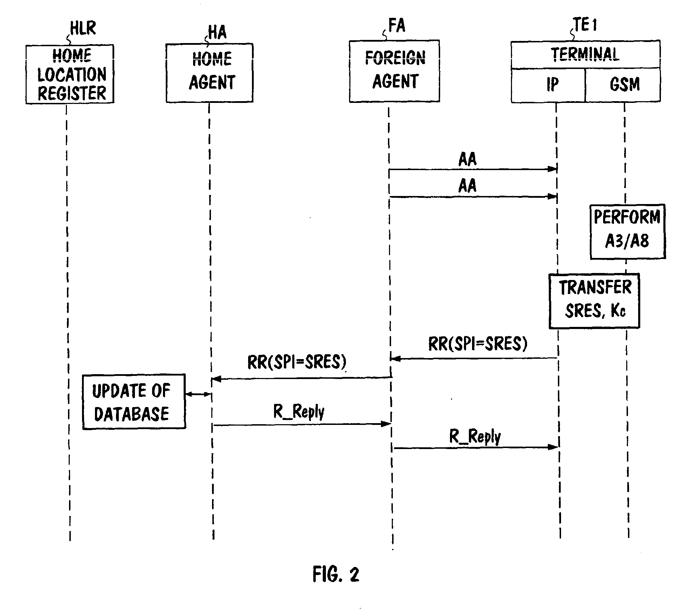

Figure 2 shows an example of an exchange of messages to take place in connection with the registration. According to the MIP protocol, the foreign agent FA is constantly sending broadcast messages to its own sub-network which are called by the name of "agent advertisement" and which are indicated by the reference mark AA in the figure. When the terminal connects to the said sub-network, it receives these messages and based on them it concludes whether it is in its own home network or in some other network. If the terminal finds that it is in its home network, it will function without any mobility services. Otherwise the terminal will get a c/o address (a care-of address) to the concerned foreign network. This address is the address of that point in the network to which the terminal is connected temporarily. This address at the same time forms the termination point of a tunnel leading to the said terminal. The terminal typically gets the address from the above-mentioned broadcast messages sent by the foreign agent. Then the terminal transmits to its own home agent a registration request RR through foreign agent FA. The message contains, among other things, the c/o address just obtained by the terminal. Based on the received registration request, the home agent updates the location information of the concerned terminal in its database and sends to the terminal a registration reply R_Reply through the foreign agent. The reply message contains all the necessary information about how (on what conditions) the home agent has approved of the registration request.

The mobile node may also register directly with the home agent. The above-mentioned RFC describes the rules by which a mobile node will register either directly with the home agent or through the foreign agent. If the mobile node obtains a c/o address in the manner described above, then registration must always take place through the foreign agent.

All the messages mentioned above between the terminal, the foreign agent and the home agent are messages in accordance with the MIP protocol. The following is a description in greater detail of how these messages are used in the present invention.

The authentication to be carried out in connection with the registration is based on a hash value computed from the registration message. The computation uses the secret shared by the network and the user. The MIP contains a Mobility Security Association defined for mobile nodes which the nodes may use for agreeing with each other on which security characteristics to use. The mobility security association includes a set of contexts, each context stating the authentication algorithm, the mode in which the said algorithm is used, the secret mentioned (e.g. a key or pair of keys) and the manner in which to protect against so-called replay attacks. The mobile nodes choose a certain context for use with the above-mentioned security parameter index SPI, which indicates the context to be used at each time.

A special extension mechanism is defined in the MIP by which so-called extensions are added to the MIP control messages or to the ICMP (Internet Control Message Protocol) messages, in which extensions optional information can be transmitted.

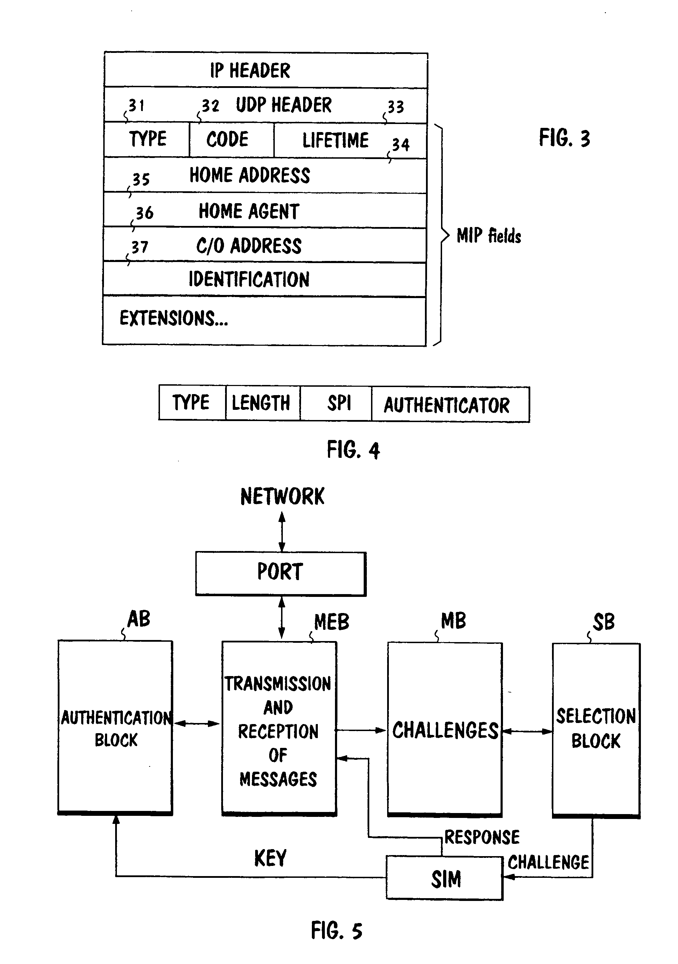

The registration request and reply (RR and R_Reply, Figure 2) use the UDP protocol (User Datagram Protocol). Figure 3 shows the general structure of the headers of these registration messages. The IP and UDP headers are followed by MIP fields including a type field 31, which tells the type of the MIP message, a code field 32, which in the case of a registration request tells various information relating to the mobile node and the registration request and in the case of a registration reply tells the result of the registration request, a lifetime field 33, which tells the time of validity of the request or the accepted registration, a home address field 34, which contains the IP address of the mobile node, a home agent field 35, which contains the IP address of the mobile node's home agent, and an identification field 37, which contains a number connecting together the request and the related reply. The registration request also contains a c/o address field 36 indicating the IP address of the termination point of the above-mentioned tunnel (the registration reply does not contain this field).

The fixed part of the header described above is followed by the above-mentioned extensions. Special extensions (authentication extensions) are provided for authentication. E.g. registration messages between the mobile node and its home agent are authenticated with the aid of a Mobile-Home Authentication Extension, which is especially reserved for this purpose and which must be present in all registration requests and in all registration replies. (On the other hand, the Mobile-Foreign Authentication Extension used between the mobile node and the foreign agent is present in registration requests and replies only if there is a mobility security association between the mobile node and the foreign agent.)

Figure 4 illustrates the structure of an extension used between a mobile node and its home agent. The extension contains the type information indicating the type of extension, length information indicating the total length of the extension, the SPI index, the length of which is 4 bytes, and the authenticator, the length of which may vary and has a default value of 128 bits.

In the authentication, the default algorithm is the known MD5 algorithm in the so-called prefix+suffix mode. MD5 is an algorithm which from a message of an arbitrary length computes a 128-bit long digest, which is the above-mentioned check or hash value and which in this case functions as the authenticator on which the authentication is based. The prefix+suffix mode means that in the bit string from which the authenticator is computed there is first and last a secret (e.g. a common key) which is common to the network and the mobile node. In the authentication extension the SPI index is used to state which context is used. The context for its part indicates how the authenticator (hash value) should be formed. The authenticator is transmitted to the peer in the authentication extension (Figures 3 and 4), whereby the peer is able with the aid of the SPI independently to form the authenticator and to compare it with the received authenticator.

The invention utilises the characteristics of a mobile communications network, especially of the GSM network, to form the shared secret in the following manner.

Home agent HA fetches from the authentication centre AuC located in connection with the home location register HLR of the mobile communications network a set of subscriber-specific authentication triplets, each of which contains a challenge (RAND), a signed response (SRES) and a key Kc (a connection-specific encryption key) in a known manner. The subscriber-specific information can be fetched e.g. in such a way that IMSIs (international Mobile Subscriber Identities) corresponding to the IP addresses of the terminals are stored in the home agent for inquiries. Transmission of the authentication triplets may be performed in any known manner, e.g. by providing the authentication centre with a TCP/IP stack and by transferring the triplets to the home agent in one or more IP datagrams. As mentioned above, the home agent and the home location register as well as the authentication centre are typically owned by the same operator and they may be located e.g. in the same room, which means that the said transmission connection is secure. What is essential is only the circumstance that the home agent receives a signed response and a key Kc from the authentication triplets. Thus, it is possible even not to transfer the challenges. Home agent HA stores the authentication triplets with itself.

In addition, the challenges (RANDs) which the authentication triplets contain are transferred further to the mobile node (to terminal TE1) in some suitable existing manner of transmission. The transmission may be performed either by the home agent on receiving the authentication triplets or by the HLR/AuC in response to the authentication triplet request sent by the home agent. One alternative is to transfer the challenges by using a short message from HLR/AuC by way of the short-message switching centre SMSC to the terminal. Another alternative is to transmit the challenges through the Internet in an IP datagram. However, if the terminal has not yet been in connection with the IP network even once, the transmission must be carried out using the GSM network (by a short message). Another alternative in such a case is to make an agreement to the effect that in connection with the first registration some predetermined RAND value is used, whereby the transmission of challenges can then be carried out through the IP network.

The mechanisms for transmitting authentication triplets and challenges are not essential from the viewpoint of the invention, but any known technique can be used in the transmission. The number of authentication triplets and challenges which must be fetched and transmitted in one go depends on which transmission mechanism is used. E.g. the maximum length of a short message (160 characters) limits the number of challenges transmitted at a time to ten, since the challenge length is 16 bytes.

When the mobile node TE1 wants to perform a MIP registration, one of the concerned challenges is chosen for use in the mobile node, whereupon the known A3 and A8 algorithms are performed on the SIM card using the said challenge (compare to Figure 2). This results in a response (SRES) and a key Kc, of which the former has a length of 32 bits and the latter has a length of 64 bits. In the above-mentioned registration request message RR the just computed SRES value is then sent as the SPI parameter (compare with Figures 2 and 4) and the obtained key Kc is used as the above-mentioned secret, on the basis of which the authenticator is computed which is included in the registration request message. As mentioned above, 32 bits is exactly the length of SPI defined in MIP. Having received the SRES value the home agent finds which challenge the user has chosen, whereby it may choose the corresponding Kc and perform a check of the authenticator.

Thus, the exchange of registration messages takes place in an otherwise known manner, except that the value of the calculated response is transmitted in the SPI field of the registration request message and, in addition, the secret used in computing the authenticator is the key generated with the aid of the mobile communications system (the connection-specific encryption key Kc generated in the GSM system).

The authentication triplets may also be stored e.g. in connection with the HLR/AuC or in some third place without transmitting them to the home agent. Hereby the procedure is such that on receiving the registration request message the home agent inquires from the place where the authentication triplets are stored which key was in question. However, this requires a secure connection between the home agent and the place of storage.

The MIP determines the permissible SPI values; the values 0...255 are reserved and they may not be used in any security association. If the challenge produces such a SRES value which is not permissible as a SPI value, the challenge in question must be rejected. Such a logic can be constructed in connection with the HLR/AuC which will filter away such challenges that would produce a non-permissible value. Alternatively, such a logic can be constructed at the end of the mobile node. Hereby the mobile node will not transmit such registration requests wherein the SRES value corresponds to a non-permissible SPI value.

It is possible that of the challenges intended for or already transmitted to the terminal two or more are such which give the same SRES value. If this happens, the used secret has not been unambiguously defined. Hereby all except one of the concerned challenges are rejected. This logic may be in connection with the HLR/AuC or in the terminals.

Figure 5 illustrates those functional blocks of a terminal which are essential to the invention. The figure shows only one interface to the network (IP network). The challenges from the network arrive at the message transmission and reception block MEB, from which they are stored in the memory block MB. The selection block SB selects one of the stored challenges and inputs it to the SIM card. The response obtained as a result is input to transmission and reception block MEB, which inserts the response in the field reserved for SPI of the outgoing registration request message. The authentication block AB defines an authenticator for outgoing messages using the key Kc obtained from the SIM module, and it carries out authentication of incoming messages using the said key.

Authentication in the GSM network is based on a comparison of a 32-bit SRES value. Since the invention uses a 64-bit key Kc for the authentication, the security level of the authentication exceeds the GSM level. The encryption key Kc is not useful as such from MIP's viewpoint, but it only forms the secret shared by the mobile node and the network. However, if the achieved authentication security level is considered too poor, it is possible to use e.g. a key Kc produced by two successive RANDs as the secret.

In order to prevent a so-called replay attack, it is possible to use means defined in the MIP, a time stamp or a nonce, both of which use the identification field described above. When using a time stamp, an adequate synchronisation of the clocks used by the user and the network must be ensured separately. However, the procedure to be used must be chosen in advance, since it can not be made known using the SPI.

Alternatively, such a procedure can be used which ensures that the used challenges are unique, whereby the network may not transmit or accept any challenges which have already been used. This requires additional functionality in the HLR/AuC or in the home agent (or in both), so that they will not accept a challenge which has already been used.

The invention may also be used without a mobile communications network, because it suffices for the system to include a network element able to form authentication triplets in the same way as the HLR/AuC. Thus, the terminals may also be fixed. If a mobile communications network is not utilised, it is not possible to use a short message for transmitting the first set of challenges, but the first registration must be performed e.g. by using a challenge value agreed upon in advance.

The challenge value need not be transmitted from the terminal, but it is sufficient that the home agent learns which key has been chosen for use. This message can be given e.g. so that the challenges are sorted in a similar order at both ends and the terminal only states the consecutive number corresponding to the chosen challenge. The consecutive numbers which are used may begin from any number bigger than the maximum non-permissible value (255) of the SPI, e.g. from a value of 300.

Although the invention was described above with reference to the examples shown in the appended drawings, it is obvious that the invention is not limited to these. For example, the solution according to the invention is not necessarily bound to MIP, but it may be used together with any protocol of the same kind, wherein the authenticator is transmitted with the aid of one message or even several separate messages and wherein information is transmitted on how the authenticator should be formed. Thus the invention is not either necessarily bound to the IP network. Nor is authentication necessarily performed in connection with registration. The implementation of the identification module (SIM) may also vary, but it must form the signed response in the same way as is done in a mobile communications network, for the comparison to be possible.

## Claims

1. An authentication method for a telecommunications network said method comprising the steps of:
generating a set of subscriber-specific authentication data blocks in the telecommunications network, each authentication data block containing a challenge, a signed response and a key,
transmitting at least some of the challenges contained in the authentication data blocks to a terminal equipment (TE1), providing an identification unit in the terminal equipment which receives the challenge as input and from said challenge determines the signed response and the key,
**characterized by**
choosing one of the challenges in the terminal equipment (TE1), and based on the chosen challenge defining the signed response and the key using the identification unit of the terminal equipment (TE1), and
transmitting from said terminal equipment (TE1) an authenticator and a data unit (SPI) to the telecommunications network, the data unit (SPI) containing information relating to the manner in which the authenticator is formed and notifying the network of which key was used to form said authenticator, corresponding to which challenge was chosen, and
defining in the telecommunications network a hash value to be compared with said authenticator, said hash value being defined using said key as determined from said data unit (SPI).

2. Method as defined in claim 1, **characterized in that** the data unit is a Security Parameter Index in the registration message of the Mobile IP protocol.

3. Method as defined in claim 1 or 2, **characterized in that** the value of the signed response determined at the terminal equipment is located in the data unit.

4. Method as defined in claim 1, **characterized in that** the challenges are sorted in an order at the terminal equipment with the aid of predetermined sorting criteria and a consecutive number corresponding to the chosen challenge is located in the data unit.

5. Method as defined in claim 1, **characterized in that** the identification unit used in the terminal equipment is the subscriber identity module SIM used by the GSM system and the said authentication blocks are authentication triplets used by the GSM system.

6. Method as defined in claim 5, **characterized in that** the authentication triplets are fetched from the authentication centre AuC of the GSM system.

7. Method as defined in claim 6, **characterized in that** the challenges to be transmitted to the terminal equipment are transmitted by using a known short message switching service.

8. Method as defined in claim 1, **characterized in that** the challenges to be transmitted to the terminal equipment are transmitted in an IP datagram to be sent through the network.

9. Method as defined in claim 1, **characterized in that** the authentication blocks are transmitted to the home agent of the terminal equipment and with the aid of the said data unit a message is given about which key corresponding to which challenge was chosen, whereby the said hash value is defined in the home agent.

10. An authentication system for a telecommunications network comprising:
a terminal equipment (TE1) comprising an identification unit, which receives as input a challenge from which a signed response and a key are defined
generating means (HLR/AuC) for generating authentication data blocks wherein said authentication data blocks are arranged to contain the challenge, the signed response and the key,
transmission means for transmitting said challenges contained in the authentication data blocks to the terminal equipment,
**characterized by**
said terminal equipment further comprising:
selection means (SB) for selecting one challenge for use, and first message transmission means arranged to:
locate a value in said data unit which indicates a key wherein said key corresponds to the challenge selected for use in the terminal equipment; and
define an authenticator based on the chosen key; and further arranged to
transmit said authenticator and a data unit (SPI) to the telecommunications network, wherein said data unit contains information relating to the manner in which the authenticator is formed,
the system further comprising checking means (HA) for defining a hash value with the aid of the data unit (SPI) based on the chosen key.

11. System as defined in claim 10, **characterized in that** the identification unit located in connection with the terminal equipment is a subscriber identity module SIM used in the GSM mobile communications system.

12. System as defined in claim 10, **characterized in that** the said generating means include an authentication centre AuC of the GSM mobile communications system.

13. System as defined in claim 10, **characterized in that** the said transmission means include means (SMSC) carrying out a known short 15 message switching service.

## Patentansprüche

1. Authentifizierungsverfahren für ein Telekommunikationsnetz, wobei das Verfahren folgende Schritte umfasst:
Erzeugen eines Satzes von teilnehmerspezifischen Datenblöcken zur Authentifizierung im Telekommunikationsnetz, wobei jeder Datenblock zur Authentifizierung eine Anfrage, eine verschlüsselte Antwort und einen Schlüssel enthält,
Übertragung von mindestens einigen der Anfragen, die in den Datenblocks zur Authentifizierung enthalten sind, an ein Endgerät (TE1),
Bereitstellen einer Identifizierungseinheit in dem Endgerät, das die Anfrage als Eingabe erhält und aus der Anfrage die verschlüsselte Antwort und den Schlüssel festlegt,
**gekennzeichnet durch**
das Auswählen einer der Anfragen in dem Endgerät (TE1) und, anhand der ausgewählten Anfrage, Festlegen der verschlüsselten Antwort und des Schlüssels unter Verwendung der Identifikationseinheit des Endgeräts (TE1), und
das Übertragen eines Authentikatoren und einer Dateneinheit (SPI) von dem Endgerät (TE1) zu dem Telekommunikationsnetz, wobei die Dateneinheit (SPI) Informationen enthält, die sich auf die Art und Weise beziehen, in der der Authentikator gebildet ist, und dem Netz mitteilt, welcher Schlüssel verwendet wurde, um den Authentikator zu bilden, und entsprechend, welche Anfrage gewählt wurde, und
das Festlegen eines Hashwertes in dem Telekommunikationsnetz, der mit dem Authentikator verglichen werden soll, wobei der Hashwert festgelegt wird, indem der Schlüssel verwendet wird, wie er von der Dateneinheit (SPI) festgelegt ist.

2. Verfahren nach Anspruch 1, **dadurch gekennzeichnet, dass** die Dateneinheit ein Security Parameter Index in der Registrierungsnachricht des Mobile-IP-Protokolls ist.

3. Verfahren nach Anspruch 1 oder 2, **dadurch gekennzeichnet, dass** der Wert der verschlüsselten Antwort, die beim Endgerät festgelegt ist, sich in der Dateneinheit befindet.

4. Verfahren nach Anspruch 1, **dadurch gekennzeichnet, dass** die Anfragen bei dem Endgerät mit Hilfe von vorgegebenen Sortierkriterien in einer Reihenfolge sortiert sind und eine fortlaufende Nummer, die der ausgewählten Anfrage entspricht, sich in der Dateneinheit befindet.

5. Verfahren nach Anspruch 1, **dadurch gekennzeichnet, dass** die Identifizierungseinheit, die in dem Endgerät verwendet ist, das Teilnehmer-Identifizierungs-Modul SIM ist, das von dem GSM-System verwendet wird, und dass die Authentifizierungsblöcke Authentifizierungstripletts sind, die von dem GSM-System verwendet werden.

6. Verfahren nach Anspruch 5, **dadurch gekennzeichnet, dass** die Authentifizierungstripletts aus dem Authentifizierungszentrum AuC des GSM-Systems geholt werden.

7. Verfahren nach Anspruch 6, **dadurch gekennzeichnet, dass** die an das Endgerät zu übertragenden Anfragen übertragen werden, indem ein bekannter Kurznachrichten vermittelnder Dienst verwendet wird.

8. Verfahren nach Anspruch 1, **dadurch gekennzeichnet, dass** die an das Endgerät zu übertragenden Anfragen in einem IP-Datagramm übertragen werden, dass über das Netz geschickt wird.

9. Verfahren nach Anspruch 1, **dadurch gekennzeichnet, dass** die Authentifizierungsblocks an den Home Agent des Endgeräts übertragen werden und dass mit Hilfe der Dateneinheit eine Mitteilung darüber erfolgt, welcher Schlüssel entsprechend welcher Anfrage ausgewählt wurde, wodurch der Hashwert in dem Home Agent festgelegt wird.

10. Authentifizierungssystem für ein Telekommunikationsnetz, umfassend:
ein Endgerät (TE1), umfassend eine Identifizierungseinheit, die als Eingabe eine Anfrage erhält, von der eine verschlüsselte Antwort und ein Schlüssel festgelegt werden.
Generierungsmittel (HLR/AuC) zum Erzeugen von Datenblocks zur Authentifizierung, wobei die Datenblocks zur Authentifizierung so angeordnet sind, dass sie die Anfrage, die verschlüsselte Antwort und den Schlüssel enthalten,
Übertragungsmittel zur Übertragung der Anfragen, die in den Datenblocks zur Authentifizierung enthalten sind, an das Endgerät,
**dadurch gekennzeichnet, dass**
das Endgerät des Weiteren Folgendes umfasst:
Auswahlmittel (SB) zur Auswahl einer Anfrage zur Verwendung, sowie erste Nachrichtenübertragungsmittel, die so angeordnet sind,
dass ein Wert in der Dateneinheit lokalisiert wird, der einen Schlüssel angibt, wobei der Schlüssel der Anfrage entspricht, die zur Verwendung in dem Endgerät ausgewählt ist; und
ein Authentikator aufgrund des ausgewählten Schlüssels festgelegt wird; und des Weiteren so angeordnet, dass
sie den Authentikator und eine Dateneinheit (SPI) an das Telekommunikationsnetz übertragen, wobei die Dateneinheit Informationen enthält, die sich auf die Art und Weise beziehen, in der der Authentikator gebildet ist,
wobei das System des Weiteren Prüfmittel (HA) enthält, um einen Hashwert mit Hilfe der Dateneinheit (SPI) aufgrund des ausgewählten Schlüssels festzulegen.

11. System nach Anspruch 10, **dadurch gekennzeichnet, dass** die Identifizierungseinheit, die sich in Verbindung mit dem Endgerät befindet, ein Teilnehmer-Identifizierungs-Modul SIM ist, das in dem GSM-Mobilkommunikationssystem verwendet wird.

12. System nach Anspruch 10, **dadurch gekennzeichnet, dass** die Generierungsmittel ein Authentifizierungszentrum AuC des GSM-Mobilkommunikationssystems beinhalten.

13. System nach Anspruch 10, **dadurch gekennzeichnet, dass** die Übertragungsmittel Mittel (SMSC) beinhalten, die einen bekannten Kurznachrichten vermittelnden Dienst ausführen.

## Revendications

1. Procédé d'authentification pour un réseau de télécommunications, ledit procédé comprenant les étapes consistant à :
générer un ensemble de blocs de données d'authentification spécifiques à un abonné dans le réseau de télécommunications, chaque bloc de données d'authentification contenant une interrogation, une réponse signée et une clé,
transmettre au moins certaines des interrogations contenues dans les blocs de données d'authentification à un équipement terminal (TE1),
fournir une unité d'identification dans l'équipement terminal qui reçoit l'interrogation comme entrée et à partir de ladite interrogation détermine la réponse signée et la clé,
**caractérisé par** les étapes consistant à
choisir une des interrogations dans l'équipement terminal (TE1), et sur la base des interrogations choisies, définir la réponse signée et la clé en utilisant l'unité d'identification de l'équipement terminal (TE1), et
transmettre depuis ledit équipement terminal (TE1) un authentifiant et une unité de données (SPI) au réseau de télécommunications, l'unité de données (SPI) contenant des informations relatives à la manière dont l'authentifiant est formé et notifiant au réseau quelle clé a été utilisée pour former ledit authentifiant, correspondant à l'interrogation qui a été choisie, et
définir dans le réseau de télécommunications une valeur de hachage devant être comparée avec ledit authentifiant, ladite valeur de hachage étant définie en utilisant ladite clé telle que déterminée à partir de ladite unité de données (SPI).

2. Procédé selon la revendication 1, **caractérisé en ce que** l'unité de données est un index des paramètres de sécurité dans le message d'enregistrement du protocole IP Mobile.

3. Procédé selon la revendication 1 ou 2, **caractérisé en ce que** la valeur de la réponse signée déterminée au niveau de l'équipement terminal est localisée dans l'unité de données.

4. Procédé selon la revendication 1, **caractérisé en ce que** les interrogations sont triées dans un ordre au niveau de l'équipement terminal à l'aide de critères de tri prédéterminés et un numéro consécutif correspondant à l'interrogation choisie est localisé dans l'unité de données.

5. Procédé selon la revendication 1, **caractérisé en ce que** l'unité d'identification utilisée dans l'équipement terminal est le module d'identité de l'abonné SIM utilisé par le système GSM et lesdits blocs d'authentification sont des triplets d'authentification utilisés par le système GSM.

6. Procédé selon la revendication 5, **caractérisé en ce que** les triplets d'authentification sont extraits du centre d'authentification AuC du système GSM.

7. Procédé selon la revendication 6, **caractérisé en ce que** les interrogations devant être transmises à l'équipement terminal sont transmises en utilisant un service de commutation de messages courts connu.

8. Procédé selon la revendication 1, **caractérisé en ce que** les interrogations devant être transmises à l'équipement terminal sont transmises dans un datagramme IP devant être envoyé par l'intermédiaire du réseau.

9. Procédé selon la revendication 1, **caractérisé en ce que** les blocs d'authentification sont transmis à l'agent local de l'équipement terminal et à l'aide de ladite unité de données, un message est donné concernant la clé correspondant à l'interrogation qui a été choisie, moyennant quoi ladite valeur de hachage est définie dans l'agent local.

10. Système d'authentification pour un réseau de télécommunications comprenant :
un équipement terminal (TE1) comprenant une unité d'identification, qui reçoit comme entrée une interrogation à partir de laquelle une réponse signée et une clé sont définies,
des moyens de génération (HLR/AuC) pour générer des blocs de données d'authentification dans lesquels lesdits blocs de données d'authentification sont agencés pour contenir l'interrogation, la réponse signée et la clé,
des moyens de transmission pour transmettre lesdites interrogations contenues dans les blocs de données d'authentification à l'équipement terminal,
**caractérisé par**
ledit équipement terminal comprenant en outre :
des moyens de sélection (SB) pour sélectionner une interrogation à utiliser, et
des premiers moyens de transmission de message agencés pour :
localiser une valeur dans ladite unité de données qui indique une clé où ladite clé correspond à l'interrogation sélectionnée pour l'utilisation dans l'équipement terminal ; et
définir un authentifiant sur la base de la clé choisie ; et en outre agencés pour
transmettre ledit authentifiant et une unité de données (SPI) au réseau de télécommunications, où ladite unité de données contient des informations relatives à la manière dont l'authentifiant est formé,
le système comprenant en outre des moyens de vérification (HA) pour définir une valeur de hachage à l'aide de l'unité de données (SPI), sur la base de la clé choisie.

11. Système selon la revendication 10, **caractérisé en ce que** l'unité d'identification localisée en connexion avec l'équipement terminal est un module d'identité de l'abonné SIM utilisé dans le système de communications mobiles GSM.

12. Système selon la revendication 10, **caractérisé en ce que** lesdits moyens de génération incluent un centre d'authentification AuC du système de communications mobiles GSM.

13. Système selon la revendication 10, **caractérisé en ce que** lesdits moyens de transmission incluent des moyens (SMSC) effectuant un service de commutation de messages 15 courts connu.
